# EUROPÄISCHE PATENTSCHRIFT

(11) **EP 1 570 982 B1**
(45) Veröffentlichungstag und Bekanntmachung des Hinweises auf die Patenterteilung: **25.04.2007**
(21) Anmeldenummer: 05000554.5
(22) Anmeldetag: 13.01.2005
(51) Int. Cl.: B32B 5/26, B32B 27/32, B44C 7/00

(54) **Opakes und strukturiertes Wandbelagmaterial mit einer Träger- und einer Dekorseite**
Opaque and structured wallboard having a substrate and decorative layer
Tapisserie opaque et structurée ayant un substrat et une couche décorative

(30) Priorität: 16.02.2004 DE 102004008103
(43) Veröffentlichungstag der Anmeldung: 07.09.2005
(73) Patentinhaber: Sandler AG, 95126 Schwarzenbach/Saale (DE); Erfurt & Sohn KG, D-42399 Wuppertal (DE)
(72) Erfinder:

(56) Entgegenhaltungen:
- EP-A- 1 101 855
- WO-A-99/14039
- DATABASE WPI Section Ch, Week 200419 Derwent Publications Ltd., London, GB; Class A93, AN 2004-193802 XP002328108 & JP 2002 180399 A (NITTETSU KOGYO KK) 26. Juni 2002 (2002-06-26)
- DATABASE WPI Section Ch, Week 200416 Derwent Publications Ltd., London, GB; Class A97, AN 2004-159240 XP002326624 & JP 2003 127288 A (DAIWA BOUPORITECH KK) 8. Mai 2003 (2003-05-08)

## Beschreibung

Zur Verkleidung von Wandflächen ist, nicht zuletzt aufgrund der derzeitigen Anstrengungen einen besseren Wärmeschutz zu erzielen, eine Reihe von Systemen bekannt.

So offenbart die DE 297 05 272 U1 eine Putztapete aus einem bahnförmigen Trägermaterial, das eine putzartige, flexible ausgehärtete Mörtelschicht aufweist. Als Trägermaterial wird u. a. ein Spinnvliesstoff aus Polyester-Fasern eingesetzt, auf welches ein Kunstharz-Mörtel im Spritz- oder Anstrichverfahren aufgebracht ist. Der Kunstharz-Mörtel setzt sich zusammen aus einer Pulverkomponente aus feinstkörnigem Zement, Additiven und Zuschlägen sowie aus einer Elastizierkomponente, und aus Wasser. Nach gutem Durchmischen dieser Zusammensetzung wird der Kunstharz-Mörtel auf das Trägermaterial aufgetragen. Nachteilig bei dieser Putztapete ist das aufwendige Herstellungsverfahren, die Materialverschiedenheit von Träger und Putz, sowie die nur geringe Flexibilität bei der Überbrückung von nachträglich auftretenden Rissen an der so verkleideten Wand.

Die DE 31 11 899 A1 beschreibt einen Belag für Aussenwände von Gebäuden, der sich unebenen Wandflächen anpasst und nach Art einer Tapete mittels eines Klebers auf Außenwänden von Gebäuden befestigt werden kann. Als Trägermaterial wird ein Glasfaservlies oder -gewebe verwendet, auf das eine Verdichtungsmasse aufgetragen wird, worüber eine Schaumkunststoffschicht angeordnet ist. Zur Rissüberdeckung ist ein derartiger Belag nur äußerst begrenzt geeignet, da die Glasfaser-Trägermaterialien nur eine geringe Dehnung aufweisen. Auch ist hier wieder der unterschiedliche Materialaufbau zu bemängeln.

WO 03/059613 A1 handelt von einem Wand- oder Bodenbelag aus zwei Polyesterfaservlies-Lagen, die mittels einer wasserundurchlässigen Kleberschicht (z. B. Polyethylenfolie) miteinander verklebt sind.
In einer alternativen Ausführungsform ist zwischen den beiden Lagen ein Gittergeflecht (z. B. aus Glasfasern) eingelegt, wodurch diese Tapete außerdem einen Untergrund stabilisiert, der zur Rissbildung neigt

Die DE 199 55 713 C1 versucht das Problem der Rissüberbrückung durch einen hydrodynamischen gebildeten Verbund eines Glaservlieses mit einem Synthesefaservlies zu lösen. Auch hier haben Versuche gezeigt, dass die Elastizität und die Rückstellkraft nicht ausreichend sind.

Die Aufgabe der vorliegenden Erfindung ist, die vorgenannten Nachteile des Standes der Technik zu vermeiden und ein Wandbelagmaterial bereitzustellen, welches materialeinheitlich aufgebaut ist, in einer Vielzahl von Dekoren herstellbar ist und eine herausragende Elastizität bei der Überbrückung von sich nach Verarbeitung ergebenden Rissen in Wänden aufweist.

Die Aufgabe wird gemäß den Merkmalen des Anspruches 1 gelöst, vorteilhafte Ausgestaltungen sind in den Unteransprüchen aufgezeigt.

### Detaillierte Beschreibung der Erfindung:

Der vorgesehene Einsatzzweck des erfindungsgemäßen Wandbelagmaterials, die Verkleidung von Wandflächen von Gebäuden im Innen- und Außenbereich gibt neben den mechanischen Eigenschaften zur Rissüberbrückung und Elastizität weitere Anforderungen vor.

So muss die Elastizität über einen weiten Temperaturbereich (beispielsweise von - 30°C bis +80°C) bestand haben. Diese Elastizität darf allerdings nur im verbauten Zustand zum Tragen kommen, da für die Herstellung und vor allem beim Prägevorgang während der Dekorgebung Elastizität nicht erwünscht ist.

Desweiteren muss ein erfindungsgemäßes Wandbelagmaterial opak sein, um vorhandene Unebenheiten, Risse, Löcher oder alte Farbgebungen zu verdecken. Letztendlich sind aber auch chemische Beständigkeiten aufgrund der steigenden Belastung von Luft und Regen bei einem erfindungsgemäßen Wandbelag zu berücksichtigen.

Diese, zum Teil konträren Eigenschaften lassen sich nur durch die Kombination von Materialien erreichen. Erfindungsgemäß wird dies durch den adhäsiven Verbund gewährleistet. Hierbei ist ein elastischer, textiler Träger, mit einem opaken, ebenfalls textilen Dekormaterial adhäsiv verbunden.

Aufgrund der vorgenannten chemischen Anforderungen und auch des weiten Temperaturbereiches beim Einsatz wurde erfindungsgemäß eine Kombination aus Materialien polyolefinischen Charakters gewählt.

Der erfindungsgemäße Träger kann dabei beispielsweise aus einem Polypropylen-Spinnvlies bestehen. Dieses Material bietet neben ausreichenden Festigkeiten auch die erforderliche Elastizität für die Rissüberbrückung. Der Grundstoff Polypropylen ist darüber hinaus chemisch ausgesprochen inert, sodass eine Beeinträchtigung der Eigenschaften durch Umwelteinflüsse ausgeschlossen werden kann.

Als Dekorseite kommt gemäß der Erfindung ein Melt-Blown-Vliesstoff zum Einsatz, der beispielsweise auch aus Polypropylen bestehen kann.

Beide Ausgangsmaterialien werden miteinander adhäsiv, beispielsweise mittels eines polyolefinischen Hot-Melts Klebers, verbunden.

Der so entstandene Verbund wird nun erfindungsgemäß einem Strukturierungsprozess zugeführt. Dabei wird ein Dekor beispielsweise mittels eines Kalanders thermisch in den Verbund eingebracht. Hier wird mit einer beheizten Stahlwalze und einer elastischen Gegenwalze ein zum Beispiel rauhputzartiges Muster in den Verbund eingeprägt und durch nachfolgende Abkühlung fixiert.

Der Verbund ist somit an der Dekorseite bleibend strukturiert.

Beim Prägeprozess erfolgt die Verformung des erhitzten Vliesmaterials mittels Prägekalander und Stahl/Papier, Stahl/Stahl Walzen. Der Druck kann dabei zwischen 20 - 120 bar liegen. Die Temparatur beträgt dabei 100° - 160 °.

Bei dem erfindungsgemässen Wandbelag handelt es sich um ein strukturiertes Material mit fertiger optischer Anmutung.

Das erfindungsgemässe Material wird im Gegensatz zu bestehenden Sanierungssystemen, die bisher im Außenbereich Verwendung finden zwar auch in Kleber eingebettet, muß dann aber nicht mehr mit einer Dekorschicht aus Putz beschichtet werden. Bei dem erfindungsgemässen System beinhaltet der Wandbelag gleichzeitig die strukturierte Oberfläche.

Für die Verklebung auf glattem mit elastischen Dispersionsfarben beschichteten Putz wird ein Rollkleber verwendet. Bei strukturiertem Putz wird ein gefüllter Dispersionskleber oder Pulverkleber auf Zementbasis verwendet.
Nach erfolgter Reinigung, Grundierung und Risssanierung wird der Kleber entweder mit einer Rolle oder mit einem Zahnspachtel aufgetragen und der Wandbelag in dem feuchten Kleber eingelegt.

Die Unterschiede zwischen dem erfindungsgemässen Material und bestehenden Materialien sind in der Tabelle 1 gegenübergestellt.

**Tabelle 1:**

| erfindungsgemässes Material | bestehende Materialien |
|---|---|
| Laminiertes Vlies mit hohem Grammgewicht in das in einem Heißpräge-Verfahren eine Struktur geprägt wird. Die Verklebung erfolgt auf Stoß und ergibt eine gleichmäßig strukturierte Fläche. Je nach Kleberart und Auftragsmenge entsteht so in einem Arbeitsgang eine homogene Fläche, die mit handelsüblichen Fassadenfarben überstrichen wird. | Unterschiedliche Materialien (Gewebe) aus Polyester, Glasfaser, Nylon, usw.; zum Teil sehr dünn und mit offener Struktur. Nach der überlappenden Einbettung wird der Wandbelag ein oder mehrfach überspachtelt. Nach der Trocknung wird ein Strukturputz aufgetragen. |

Vorteile des erfindungsgemässen Materials:
- Durch Verwendung eines flexiblen Klebers und eines flexibel geprägten Vliesmaterials, sowie dauerelastischer Farben, hat das System besonders gute rißüberbrückende Saniereigenschaften.
- Durch Verwendung eines zementären Klebers und einer Farbe mit gutem SD Wert gute Diffusionswerte wie sie bei WDS Systemen gefordert werden.
- Im Innenbereich in allen Räumen mit hoher Feuchtigkeitsbelastung dauerhaft einsetzbar.
- Bedingt durch die geschlossene Oberfläche und den Anstrich wesentlich geringere Verschmutzung als beim Putz.
- Erheblich bessere Reinigungsfähigkeit.
- Geringerer Kostenaufwand. Keine Ansätze an den Gerüstlagern.
- Einfachere Handhabung.
- Flächensanierung und optische Gestaltung in einem Arbeitsgang.
- Bei Beschädigungen auf der Fläche ausbesserbar.

Eine entscheidende Bedeutung hat dabei die Prägung des Materials. Das erfindungsgemässe Material verhält sich elastischer als glattes Material und Putz. Weiterhin ist die optische Wirkung der Fassade bei Einsatz des erfindungsgemässen Materials vorgegeben.

Durch die thermische Verformung werden die elastischen Eigenschaften des Trägers nicht weiter beeinflusst. Das Dekormaterial aus dem Meltblownvliesstoff behält, trotz starker Verformung seine opaken Eigenschaften ohne, wie bei anderen Materialien wie Folien oder Papieren häufig vorkommend, aufzureißen, d.h. den Verformungsprozess nicht rissfrei zu überstehen.

Der Meltblown-Vliesstoff neigt dabei durch die zum Einsatz kommenden Ausgangspolymere mit hohem Schmelzflussindex zum Verhauten an der Oberfläche, was eine insgesamt geschlossene Oberfläche gewährleistet. Somit ist auch eine Resistenz gegen das Eindringen von Wasser, beispielsweise bei Regen, in die Oberfläche gegeben.

Ein so hergestellter, erfindungsgemäßes Wandbelagmaterial ist in seiner Elastizität den Wandbelagmaterialien nach dem Stand der Technik deutlich überlegen. Nachstehende Tabelle 2 zeigt einen Vergleich des erfindungsgemäßen Wandbelagmaterials mit dem Stand der Technik.

Als Prüfmethode kam eine in Anlehnung an EDANA 20.2-89 abgewandelte Methode zum Einsatz.
Dabei wurden von den getesteten Wandbelagmaterialien jeweils 50 mm breite und 300 mm lange Streifen hergestellt. Die Länge wurde dabei in Prüfrichtung herausgeschnitten.

Auf den so beschaffenen Prüfling (10) wurden dann mit einer Klebstoff-Verbindung (9), beispielsweise unter Verwendung von Brillux-Armierungskleber zwei Holzplättchen mit den Maßen 50mm * 100mm dergestalt fixiert, dass sich die Stirnseiten der beiden Holzplättchen in einem Abstand von 1 mm gegenüber lagen und einen definierten Spalt (8) bildeten. Dieser Spalt (8) simulierte einen Riss in einer Wand. Dieser simulierte Riss wurde dann nur durch das Wandbelagmaterial überdeckt. In der Folge ist die Eigenschaft zur dauerhaften Rissüberdeckung direkt rückführbar auf die Elastizität des eingesetzten Wandbelagmaterials.

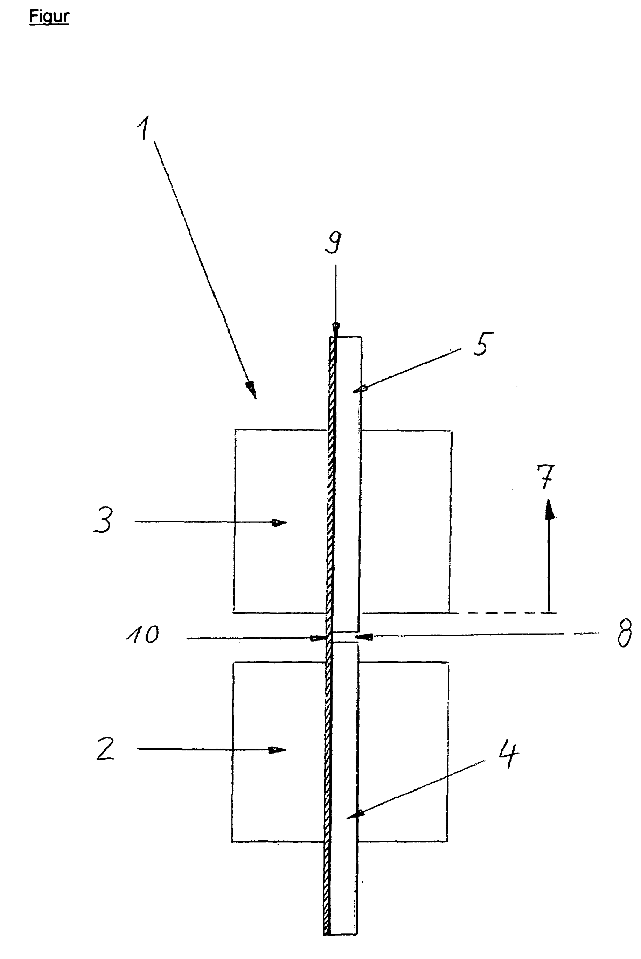

Die Konfiguration des Test-Aufbaus (1), d. h. die Anordnung des Prüflings (10) ist in der Figur graphisch dargestellt.

Ein erstes Holzplättchen fungierte als Klemm-Aufnahme (4) zum Einspannen in die feststehende Klemme (2), und ein zweites Holzplätte diente als Klemm-Aufnahme (5) zum Einspannen in die verfahrbare Klemme (3).
Der so präparierte Prüfling (10) wurde in eine Zugprüfmaschine, Zwick Typ 1425, eingespannt und mit gleichmäßiger Geschwindigkeit von 0,1 mm/min in Verfahr-Richtung (7) auseinandergezogen. Die mechanische Belastung des Wandbelagmaterials fand dabei nur in dem Spalt-überbrückendem Bereich des Wandbelagmaterials auf den Holzplättchen statt.

**Tabelle 2: Vergleich der Dehnung bei Kraft-Maximum verschiedener Wandbelaggssysteme in Längs-, Quer und Diagonalrichtung**

| | Prüfrichtung | | |
|---|---|---|---|
| Materialart | längs | quer | diagonal |
| Erfindungsgemäßes Material | 29,70% | 10,35% | 28,05% |
| Material auf Basis Glas | 1,25% | 1,00% | 0,90% |
| Material auf Basis PET | 1,82% | 1,30% | 1,55% |
| Material auf Basis Papier | 0,90% | 0,90% | 0,75% |

Man kann erkennen, dass die Dehnung und damit die Überbrückung von nach der Verklebung auftretenden Rissen durch z.B. Gebäudesenkungen bei dem erfindungsgemäßen Wandbelagmaterial in deutlich höherem Maß vorhanden ist als bei bisher bekannten Wandbelagmaterialien.

Durch die Verwendung von Polymeren mit geringen Glastemperaturen bleiben diese elastischen Eigenschaften auch bei geringeren Temperaturen erhalten, was bedeutet, dass diese Art von Wandbelagmaterial speziell für den Außenbereich von Gebäuden geeignet ist.

### Bezugszeichen-Liste

- 1 =: Test-Aufbau
- 2 =: Klemme, feststehend
- 3 =: Klemme, verfahrbar
- 4 =: Klemm-Aufnahme für feststehende Klemme
- 5 =: Klemm-Aufnahme für verfahrbare Klemme
- 7 =: Verfahr-Richtung
- 8 =: Spalt
- 9 =: Klebstoff-Verbindung
- 10 =: Prüfling

## Patentansprüche

1. Opakes und strukturiertes Wandbelagmaterial, bestehend aus einer Trägerseite und einer damit verbundenen Dekorseite
**dadurch gekennzeichnet,**
- **dass** die Trägerseite und die Dekorseite aus trockengelegten Vliesstoffen bestehen,
- **dass** die Fasern der Dekorseite einen mittleren Faserdurchmesser von kleiner 10 µm aufweisen,
- und **dass** die Trägerseite und die Dekorseite über einen flexiblen Kleber miteinander verbunden sind und dieser Verbund eine Kraft-Maximum Dehnung von größer 10% aufweist.

2. Wandbelagmaterial nach Anspruch 1,
**dadurch gekennzeichnet,**
**dass** die Trägerseite und die Dekorseite materialeinheitlich auf Polyolefinen aufgebaut sind.

3. Wandbelagmaterial nach Anspruch 1,
**dadurch gekennzeichnet,**
**dass** die Dekorseite aus einem schmelzgeblasenen Vliesstoff besteht.

4. Wandbelagmaterial nach Anspruch 1,
**dadurch gekennzeichnet,**
- **dass** die Dekorseite ein Flächengewicht von 10-200 g/qm und
- **dass** die Trägerseite ein Flächengewicht von 30-300 g/qm aufweist.

5. Wandbelagmaterial nach Anspruch 1,
**dadurch gekennzeichnet,**
**dass** der Verbund an der Dekorseite bleibend strukturiert ist.

## Claims

1. An opaque and structured wall-covering material consisting of a supporting side and a decorated attached thereto,
**characterized in that**,
- the supporting side and the decorated side consist of dry-laid non-woven materials,
- the fibers of the decorated side feature a mean fiber diameter smaller than 10 µm,
- and that the supporting side and the decorated side are attached thereto by means of a flexible adhesive and said bonding features a maximum force expansion greater than 10%.

2. A wall-covering material according to Claim 1,
**characterized in that**,
the supporting side and the decorated side are made of uniform materials of polyolefin basis.

3. A wall-covering material according to Claim 1,
**characterized in that**,
the decorated side consists of a hot-blown non-woven material.

4. A wall-covering material according to Claim 1,
**characterized in that**,
the decorated side has a weight of 10-200 g/sqm
and that the supporting side has a weight of 30-300 g/sqm.

5. A wall-covering material according to Claim 1,
**characterized in that**,
the bonding on the decorated side is permanently structured.

## Revendications

1. Matériau de revêtement mural opaque et structuré, constitué d'un côté porteur et d'un côté décoratif qui y est relié
**caractérisé**
- **en ce que** le côté porteur et le côté décoratif sont constitués de tissus non-tissés asséchés,
- **en ce que** les fibres du côté décoratif présentent un diamètre de fibre moyen inférieur à 10 µm,
- et **en ce que** le côté porteur et le côté décoratif sont reliés entre eux par l'intermédiaire d'une colle flexible et en ce que cette composition présente un allongement à la charge maximum supérieur à 10%.

2. Matériau de revêtement mural selon la revendication 1,
**caractérisé**
**en ce que** le côté porteur et le côté décoratif sont disposés de manière uniforme sur un matériau en polyéfine.

3. Matériau de revêtement mural selon la revendication 1,
**caractérisé**
**en ce que** le côté décoratif est constitué d'un tissu en non-tissé thermoformé par fusion (melt flow).

4. Matériau de revêtement mural selon la revendication 1,
**caractérisé**
- **en ce que** le côté décoratif présente une masse surfacique de 10-200 g/m² et
- **en ce que** le côté porteur présente une masse surfacique de 30-300 g/m².

5. Matériau de revêtement mural selon la revendication 1,
**caractérisé**
**en ce que** la combinaison est structurée de manière permanente sur le côté décoratif.
